(19) Europäisches Patentamt
European Patent Office
Office européen des brevets

(11) **EP 3 816 573 B1**

(12) **EUROPÄISCHE PATENTSCHRIFT**

(45) Veröffentlichungstag und Bekanntmachung des Hinweises auf die Patenterteilung:
**26.07.2023  Patentblatt 2023/30**

(21) Anmeldenummer: **19206861.7**

(22) Anmeldetag: **04.11.2019**

(51) Internationale Patentklassifikation (IPC):
**G01B 11/06** *(2006.01)*    *G01B 9/02* *(2022.01)*
**G01N 21/86** *(2006.01)*

(52) Gemeinsame Patentklassifikation (CPC):
**G01B 11/06; G01N 21/4795; G01N 21/8422;**
**G01N 21/86;** G01B 9/02091; G01B 2210/40;
G01N 2021/8438

(54) **VORRICHTUNG UND VERFAHREN ZUR ANALYSE EINER MEHRSCHICHTFOLIE**

DEVICE AND METHOD FOR ANALYZING A MULTI-LAYER PLASTIC SHEET

DISPOSITIF ET PROCÉDÉ POUR ANALYSER UN FILM PLASTIQUE À PLUSIEURS COUCHES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**05.05.2021  Patentblatt 2021/18**

(73) Patentinhaber: **Hch. Kündig & Cie. AG**
**8630 Rüti/ZH (CH)**

(72) Erfinder:
• **Hänggli, Markus**
**8630 Rüti (CH)**
• **Hess, Hanspeter**
**3110 Münsingen (CH)**

(74) Vertreter: **IPS Irsch AG**
**Langfeldstrasse 88**
**8500 Frauenfeld (CH)**

(56) Entgegenhaltungen:
EP-A1- 3 330 677      CN-A- 110 196 021
JP-A- 2010 008 170    US-A- 5 633 712
US-A- 5 850 287       US-A1- 2005 088 647
US-A1- 2018 372 650

**Beschreibung**

Die Erfindung betrifft eine Vorrichtung zur Bestimmung einer Schichtdicke oder mehrerer Schichtdicken in einer Mehrschichtfolie. Die Erfindung betrifft weiter ein Verfahren zur Bestimmung der Schichtdicke oder mehrerer Schichtdicken in der Mehrschichtfolie.

Im Stand der Technik sind unter anderem aus der Verpackungsindustrie verschiedenste Dickenmesssysteme für extrudierte Kunststofffolien wohl bekannt. Zu den verwendeten Messverfahren gehören z.B. optische, radiometrische, induktive und kapazitive Messverfahren. Je nach produzierten Folien, z.B. Einschicht- oder häufig auch mehrlagige Mehrschichtfolien, oder in Abhängigkeit von den für die Folien verwendeten Materialien sind heute verschiedene Messverfahren, insbesondere berührende, berührungsarme oder berührungslose Dickenmesssysteme im Einsatz. Meist erfolgt die Online-Dickenmessung momentan mittels eines kapazitiven Dickensensors, welcher in konstantem Kontakt mit der Folie steht. Hierbei ist jedoch nur eine Gesamtdicke der Folie messbar, was bei einer Barrierefolie mit temperaturabhängiger Permittivität der Barriereschichten problematisch ist.

Als weiteres Messverfahren zur Dickenbestimmung ist die nukleare Rückstreuung mittels Gamma- oder X-Ray als eine Online-Messung bekannt. Jedoch kann auch hier nur die Gesamtdicke zuverlässig gemessen werden und bei einer sehr dünnen Folie ist die Streuung der Messwerte relativ hoch. Ausserdem kann eine Dickenmessung über eine mechanische Abtastung in Form einer Offline-Messung durchgeführt werden. Auch bei diesem Verfahren ist jedoch nur die Gesamtdicke messbar. Auch mit Ultraschall kann eine Dickenmessung durchgeführt werden (Offline und beschränkt Online). Diese ist zwar relativ präzise und zuverlässig, jedoch ist auch nur die Gesamtdicke messbar. Die Dickenmessung an der Folie wird im Stand der Technik weiter über ein Spektrum einer Infrarot-Absorption (Online am Rand einer flachgelegten Folie) durchgeführt. Die Dicken verschiedener Einzelschichten sind dabei messbar, jedoch nicht die Position der jeweiligen Einzelschicht in der Folie. Von mehreren gleichartigen Schichten wird also nur eine einzige Summe gemessen. Sie können nicht unterschieden werden. Ausserdem ist eine Eichung für jedes einzelne Material notwendig. Weiter werden Dickenmessungen im Stand der Technik mittels Mikroskopieren (Polarisations-Kontrast) von Mikrotom-Schnitten durchgeführt. Diese erfolgen als Messung an einem Mikrotom-Schnitt und sind nur für einzelne Messpunkte anwendbar. Ausserdem ist der Präparationsaufwand für die Mikrotom-Schnitte sehr hoch.

Beispielsweise ist aus dem Stand der Technik in US5850287 A eine Vorrichtung zur Vermessung der Dicke einer Multi-Schichtenfolie bekannt. Die Vorrichtung umfasst ein Interferometer zur optische Vermessung der Dicken der Schichten und eine Rolle, über welche die Folie geführt wird.

Der im Stand der Technik verbleibende Bedarf an zuverlässigen Messsystemen zur Bestimmung der Einzelschichtdicken von Einzelschichten in einer Mehrschichtfolie wird durch die vorangehend beschriebenen Systeme nicht gedeckt.

Optische Kohärenztomografie (optical coherence tomography, OCT) ist ein bildgebendes Verfahren, um 2- und 3-dimensionale Aufnahmen aus streuenden Materialien in Mikrometerauflösung zu erhalten.

Dazu wird breitbandiges Licht von zeitlich geringer Kohärenzlänge in einem Strahlteiler in zwei Teile geteilt. Ein Teil wird auf die Probe gelenkt. Der andere Teil durchläuft eine Referenzstrecke. Das von der Probe reflektierte Licht wird mit dem Referenzlicht in einem Strahlteiler zur Interferenz gebracht. Aus dem Interferenzsignal lassen sich dann verschiedene Strukturen entlang der optischen Achse (Tiefe) unterscheiden. Durch laterales Scannen über die Probe erhält man dreidimensionale Bilder. OCT ist vergleichbar mit der Ultraschallbildgebung (Sonografie), nur dass es Licht anstelle von Schall verwendet.

Haupteinsatzgebiet der OCT ist zwar die Medizin, primär die Augenheilkunde, jedoch werden OCT-Messanlagen auch verwendet um prozessbegleitend verschiedenste geometrischen Eigenschaften an 3D-Bauteilen, wie z.B. den Aussen- und Innendurchmesser, die Wandstärke oder allgemein Masse auf definierter Höhe zu prüfen.

Grundsätzlich unterscheidet man bei der OCT Technik zwischen der Time Domain (TD-OCT) und der Frequenz Domain (FD-OCT) Technik. Bei der TD-OCT wird ein Interferometer mit zeitlich variabler Referenzstrecke und einer Probenstrecke breitbandig beleuchtet. Die veränderbare Länge der Referenzstrecke wird üblicherweise mit einem beweglichen Spiegel realisiert und ist dadurch in der Messgeschwindigkeit limitiert.

Bei der Frequenz-Domänen OCT (FD-OCT) Technik wird hingegen ein Interferometer mit Referenz- und Probenarm entweder mit einer breitbandigen Laserquelle (SD-OCT) oder mit einer schmalbandigen aber zeitlich durchstimmbaren Laserquelle beleuchtet (SS-OCT). Bei der SD-OCT dient ein Spektrometer zur parallelen Detektion der verschiedenen spektralen Kanäle, im zweiten Fall werden die unterschiedlichen Wellenlängen sequentiell mit einem Einzeldetektor mit hoher elektronischer Bandbreite aufgenommen. Beide Systeme weisen eine gleichwertige Sensitivität auf, bei der SS-OCT können höhere Aufnahme-Geschwindigkeiten erreicht werden.

In der optischen Fasertechnologie erfolgt über OCT-Messungen eine Charakterisierung und Steuerung verschiedener Fasereigenschaften während des Ziehvorgangs der Fasern aus einer Vorform. Die US2004227952 beschreibt hierbei eine FDOCT-Technik bei welcher rückgestreutes Licht verwendet wird, um den Querschnitt einer Faser zu rekonstruieren, wobei Informationen über das Glas, die Beschichtung und die Defekte in einer einzigen Messung bereitgestellt werden.

Eine Breitbandlichtquelle wird fokussiert, um einen Eingangsstrahl in einer Richtung bereitzustellen, die im Wesentlichen senkrecht zur Faserseitenwand ist. Die Lichtreflexionen von Materialgrenzflächen (z. B. Luft / Faser, Beschichtung / Mantelbereich usw.) interferieren miteinander und bilden ein Interferenzmuster im Spektralbereich. Das von diesen verschiedenen Schnittstellen nachreflektierte Licht wird anschließend als Eingangssignal an ein Spektrometer angelegt, das dann ein Spektrogramm des Interferenzmusters erzeugt. Dann wird eine schnelle Fouriertransformation (fast fourier transformation, FFT) des Spektrogramms durchgeführt, wobei die Peaks der FFT mit den Orten jeder Materialgrenzfläche zusammenfallen. Durch Analyse der entsprechenden Interferenzmuster kann die Dicke jeder Schicht in der Faser (sowie der gesamte Faserdurchmesser) bestimmt werden.

Die Hauptprobleme der Dickenmesssysteme im Stand der Technik sind, dass meist nur die Gesamtdicke der Mehrschichtfolien zuverlässig bestimmt werden kann. Wenn überhaupt eine Einzelschichtdicken-Messung durchgeführt werden kann, muss diese aufwendig in Form einer Offline-Messung durchgeführt werden.

Die Aufgabe der Erfindung ist es daher, die aus dem Stand der Technik bekannten Probleme zu vermeiden und insbesondere eine Vorrichtung und ein Verfahren bereitzustellen, welche eine zuverlässige Bestimmung der Einzelschichtdicken einer Mehrschichtfolie ermöglichen.

Die diese Aufgaben lösenden Gegenstände der Erfindung sind durch die Merkmale der unabhängigen Ansprüche 1 und 9 gekennzeichnet.

Die abhängigen Ansprüche beziehen sich auf besonders vorteilhafte Ausführungsformen der Erfindung.

Die Erfindung betrifft somit eine OCT-Vorrichtung zur Bestimmung einer Schichtdicke oder mehrerer Schichtdicken in einer Mehrschichtfolie umfassend eine Strahlungsquelle zur Erzeugung einer elektromagnetischen Primärstrahlung, einen Detektor zur Erfassung einer von der Mehrschichtfolie emittierten elektromagnetischen Sekundärstrahlung, welche Sekundärstrahlung durch eine Wechselwirkung der Primärstrahlung mit der Mehrschichtfolie induziert ist, sowie einen ersten für die elektromagnetische Strahlung transparenten Kontaktblock mit einer ersten Kontaktfläche zur Herstellung eines kraftschlüssigen Kontaktes mit der Mehrschichtfolie. Die Strahlungsquelle ist derart an dem ersten Kontaktblock angeordnet, dass die elektromagnetische Primärstrahlung aus dem ersten Kontaktblock auf die Mehrschichtfolie führbar ist. Um eine vereinfachte Handhabung und einen Transport der Mehrschichtfolie zur ermöglichen, ist der erste Kontaktblock im Rahmen der Erfindung eine um eine erste Rotationsachse rotierbare erste Transportrolle und die erste Kontaktfläche ist eine erste Transportfläche. So kann die Mehrschichtfolie durch Rotation der ersten Transportrolle mittels Kontakt zur ersten Transportfläche, transportiert und durch den Messpunkt befördert werden. Ausserdem umfasst die OCT-Vorrichtung eine zweite Transportrolle mit einer zweiten Transportfläche zum Transport der Mehrschichtfolie, wobei die erste und zweite Transportfläche zum Transport der Mehrschichtfolie dienen, welche zwischen der ersten und der zweiten Transportfläche anordnenbar ist.

Die Vorrichtung ist gekennzeichnet durch die erste Transportrolle, welche eine elastische Beschichtung auf der ersten Transportfläche umfasst, wobei die elastische Beschichtung für die elektromagnetische Primärstrahlung transparent ist und in einem Betriebszustand durch die erste Transportrolle und die zweite Transportrolle derart einen Druck aufeinander ausübbar ist, dass ein Abstand zwischen der ersten Transportrolle, der zweiten Transportrolle und der Mehrschichtfolie durch die elastische Beschichtung minimiert wird und die Luft aus einem Kontaktbereich der ersten Transportrolle und Mehrschichtfolie verdrängbar ist.

Die Erfindung betrifft weiter ein Verfahren zur Bestimmung der Schichtdicke in der Mehrschichtfolie mit der erfindungsgemässen Vorrichtung. Hierbei wird der Kontakt zwischen der ersten Transportfläche und der Mehrschichtfolie hergestellt. Die elektromagnetische Primärstrahlung wird aus der ersten Transportrolle auf die Mehrschichtfolie geführt und die von der Mehrschichtfolie emittierten elektromagnetischen Sekundärstrahlung wird erfasst. Die Sekundärstrahlung wird dabei durch eine Wechselwirkung der Primärstrahlung mit der Mehrschichtfolie induziert.

Folglich kann die Strahlungsquelle am oder zumindest teilweise im Kontaktblock angeordnet sein, sodass die Primärstrahlung von der Strahlungsquelle durch den Kontaktblock auf die zu messende Mehrschichtfolie geführt werden kann.

Die Sekundärstrahlung kann eine von der Mehrschichtfolie transmittierte oder eine von der Mehrschichtfolie reflektierte Sekundärstrahlung sein.

Gemäß der Erfindung handelt es sich bei der erfindungsgemässen Vorrichtung um ein OCT-Messsystem/Vorrichtung. Hierbei ist die Sekundärstrahlung besonders bevorzugt die von der Mehrschichtfolie reflektierte Sekundärstrahlung.

Die erfindungsgemässe OCT-Vorrichtung umfasst zur Durchführung eines entsprechenden OCT-Verfahrens ein Interferometer, um eine von der Strahlungsquelle erzeugbare elektromagnetische Quellstrahlung mittels eines Strahlteilers in die von der Strahlungsquelle erzeugbare elektromagnetische Primärstrahlung (einen Probenstrahl) und einen Referenzstrahl aufzuteilen. Das von der Mehrschichtfolie reflektierte Licht (Sekundärstrahlung) wird dann mit dem Referenzstrahl in einem Interferometer überlagert und so zur Interferenz gebracht. Aus dem Interferenzsignal lassen sich dann verschiedene Schichten in der Mehrschichtfolie unterscheiden und die einzelnen Schichtdicken bestimmen. Das erfindungsgemässe Verfahren mittels OCT kann dabei auf einer Weisslicht-Interferometrie beruhen, bei welcher eine Primärstrahlung mit geringer zeitlicher Kohärenz einsetzt wird. Die erfindungsgemässe Vorrichtung besitzt bei dieser Ausführungsform vorzugsweise den Aufbau eines Michelson-Interferometers. In der Praxis beleuchtet die Strahlungsquelle über einen Strahlteiler die Mehrschichtfolie mit der Primärstrahlung (Probenstrahl), insbesondere mit dem Probenstrahl des Weisslichtinterferometers. Hierfür wird der Probenstrahlteil (also die Primärstrahlung) der von der Strahlungsquelle erzeugbaren elektromagnetischen Quellstrahlung durch den Kontaktblock auf die Mehrschichtfolie geführt. Das vom Strahlteiler durchgelassene Licht (Referenzstrahl) fällt auf einen Spiegel und wird von diesem zurückreflektiert. Der reflektierte Probenstrahl (Sekundärstrahlung) und Referenzstrahl treffen wieder zusammen (die beiden zurückgeworfenen Strahlen werden rekombiniert) und interferieren genau dann, wenn die Differenz der von beiden Strahlen zurückgelegten Wege kleiner als die Kohärenzlänge ist. Das Interferenzsignal wird mit dem Detektor aufgezeichnet und danach ausgewertet. Indem der Spiegel im Referenzarm bewegt wird, können Interferenzsignale aus unterschiedlichen Tiefen der Mehrschichtfolie erzeugt werden, sofern es es dort reflektierende Schichtübergänge gibt. Das Bewegen des Spiegels bei gleichzeitiger Messung des Interferenzsignals erlaubt somit ein axiales Scannen der Mehrschichtfolie. Da Weglängenunterschiede über die Lichtgeschwindigkeit auch als Laufzeitdifferenzen angegeben werden können, handelt es sich bei dieser erfindungsgemässen Ausführung um ein Time-Domain (TD) OCT.

Das erfindungsgemässe Verfahren kann als FD-OCT ausgebildet sein, bei dem eine breitbandige Interferenz mit spektral getrennten Detektoren erfasst wird (entweder durch Kodierung einer optischen Frequenz im Takt mit einer spektralabtastenden Strahlungsquelle oder mit einem dispersiven Detektor, wie einem Gitter oder einer Photodiodenzeile). Aufgrund der Fourier-Beziehung (Wiener-Khintchine-Theorem zwischen Autokorrelation und spektraler Leistungsdichte) kann ein A-Scan (Tiefenscan) durch eine Fourier-Transformation aus den aufgenommenen Spektren ohne Bewegung des Referenzarms sofort berechnet werden.

Insbesondere kann das FD-OCT-Verfahren als SS-OCT-Verfahren durchgeführt werden, indem die einzelnen spektralen Komponenten der Sekundärstrahlung zeitlich nacheinander aufgenommen werden, indem die Wellenlänge der Primärstrahlung durchgestimmt wird (swept source, SS). Ein erfindungsgemässes Verfahren mittels SS-OCT kommt deshalb ohne Spektrometer als Detektor aus, die Strahlungsquelle muss jedoch eine veränderbare Wellenlänge aufweisen. Wird hingegen ein Interferometer mit Referenz- und Probenstrahl mit einer breitbandigen Laserquelle bestrahlt, wird das erfindungsgemässe Verfahren als SD-OCT durchgeführt.

Zur Dickenmessung der Einzelschichten in einer durchsichtigen Mehrschichtfolie kann besonders bevorzugt ein FD-OCT-Verfahren verwendet werden. Hierbei kann die Stahlungsquelle ein Laser, insbesondere ein breitbandiger Laser, besonders bevorzugt ein Supercontinuum-Laser sein. Die Strahlungsquelle kann in einem Wellenlängenbereich von ca. 400 bis 2400 nm arbeiten. Für den verwendeten Wellenlängenbereich gelten insbesondere folgende Zusammenhänge: Kurze Wellenlängen und grosse Bandbreite (zum Beispiel 600 bis 900 nm) ergeben eine hohe Aufllösung. Grosse Wellenlängen (um 1300 nm) ergeben weniger Signalverluste durch Streuung. Die Detektoren für den IR-Bereich sind aus einem anderem Material als Detektoren für den VIS-Bereich (sichtbares Licht). Deshalb wird für die Realisierung der erfindungsgemässen Vorrichtung der verwendete Wellenlängenbereich vorzugsweise eingeschränkt beziehungsweise für verschiedene Wellenlängenbereiche verschiedene Detektoren verwendet.

Bei dem erfindungsgemässen Verfahren kann der A-Scan (quer durch die Mehrschichtfolie hindurch) durch die Fourier-Transformation des Interferenz-Spektrums erhalten werden. Der A-Scan kann also mittels einer einzigen Messung erfasst werden, wenn das Spektrum der Interferenz aufgezeichnet wird, also die Interferenzen der einzelnen Wellenlängen oder Lichtfrequenzen.

Ein B-scan (parallel zur Oberfläche der Folie) wird durch einen Transport der Mehrschichtfolie durch einen Messpunkt / Messbereich hindurch erreicht. Bei einer Online-Messung werden an der Mehrschichtfolie während der laufenden Produktion Messungen der Schichtdicke durchgeführt, um eine Regelung eines Schichtdickenprofils also der Schichtdicken der Einzelschichten der Mehrschichtfolie oder zumindest der Gesamtdicke der Mehrschichtfolie zu ermöglichen.

Insbesondere bei Anlagen zur Herstellung von Blasfolien, d.h. in Form von Blasen extrudierten Kunststofffolien, wird eine Schlauchfolie mit einem definierten Durchmesser und einer definierten mittleren Dicke hergestellt, wobei das gewünschte Schichtdickenprofil manuell oder automatisch eingestellt werden kann. Hierbei können Parameter wie ein Volumen eines Gases (typischerweise Luft), das in die Blase geblasen wird oder eine Vorschub- oder Ziehgeschwindigkeit der Blase in Bezug auf eine Rotationsgeschwindigkeit einer Extrusionskopf-Förderschnecke in Abhängigkeit des erfindungsgemässen Verfahrens zur Bestimmung der Schichtdicke korrigiert werden. Das Dickenprofil am Umfang der Folienblase kann am Blaskopf geregelt werden, indem am Umfang des Blaskopfes lokal geheizt oder gekühlt wird.

Die Strahlungsquelle ist vorzugsweise derart an der ersten Transportrolle angeordnet, dass die elektromagnetische Primärstrahlung aus der rotierenden ersten Transportrolle auf die Mehrschichtfolie geführt werden kann. Ausserdem ist die Mehrschichtfolie vorzugsweise in einem Spalt zwischen der ersten und zweiten Transportrolle angeordnet, sodass die Mehrschichtfolie durch Rotation der ersten und zweiten Transportrolle zwischen den Transportrollen durch und somit durch den Messpunkt bewegt werden kann. Die zweite Transportrolle kann für elektromagnetische Strahlung vorzugsweise transparent sein oder absorbierend oder reflektierend.

Wenn Licht als ein Beispiel für eine elektromagnetische Strahlung senkrecht auf eine Grenzfläche zwischen zwei Materialien mit verschiedenen Brechungsindizes strahlt, so wird ein Teil der Strahlung reflektiert. Der Brechungsindex von Materie ist im Allgemeinen abhängig von der Lichtwellenlänge. Der Brechungsindex von typischen Folienmaterialien für die Mehrschichtfolie beträgt in der Regel 1.49 bis 1.53.

Reflexionen an einer Schichtgrenze zwischen zwei Materialien mit Brechungsindex $n_1$ und $n_2$ berechnen sich wie folgt:

$$r = (n_1-n_2)/(n_1+n_2)$$

Eine Intensität eines OCT-Signals ist dabei proportional zu r. Luft weist einen Brechungsindex von n = 1.0 und Glas einen Brechungsindex von n = 1.5 auf. Dabei ist r ein Amplituden-Reflexionskoeffizient und R = $r^2$ ein Intensitäts- oder Leistungs-Reflexions Grad.

Für die erfindungsgemässe Vorrichtung sind hauptsächlich die Reflexionen direkt am Messpunkt wichtig. Die Übergänge zwischen den verschiedenen Materialien im Innern der Mehrschichtfolie können Reflexionen (reflektierte Sekundärstrahlung) in der Grössenordnung von ungefähr 0.003 % ergeben. Wenn die Mehrschichtfolie direkt in der Umgebung mit Luft gemessen wird, so sind die Reflexionen (reflektierte Sekundärstrahlung) an einer Aussengrenze der Mehrschichtfolie, also eines Überganges von Luft zu Mehrschichtfolie beziehungsweise von Mehrschichtfolie zu Luft etwa in der Grössenordnung von ungefähr 4%, also ungefähr 1000 mal stärker als die Reflexionen (reflektierte Sekundärstrahlung) an den Schichtgrenzen im Innern der Mehrschichtfolie.

Um eine Reflexion an einer Aussenflächen der Mehrschichtfolie möglichst klein zu machen, kann im erfindungsgemässen Verfahren und mit der erfindungsgemässen Vorrichtung eine optische Impedanzanpassung durchgeführt werden. Ohne Impedanzanpassung kann die Messung im erfindungsgemässen Verfahren wie vorangehend erwähnt durch Stör-Signale an den äussern Schichtgrenzen der Mehrschichtfolie oder durch Reflexionen an anderen optischen Elementen überstrahlt werden. Starke Reflexionen liegen unter anderem an den Schichtgrenzen zu Luft vor. Die Reflexionen an Übergängen zwischen den einzelnen inneren Schichten der Mehrschichtfolie sind in der Regel viel schwächer. Im Detektor/Spektrometer treffen alle Signale gleichzeitig ein und so können die Anteile der äussern Reflexionen die Anteile der inneren Reflexionen überstrahlen. Die Impedanzanpassung (auch Indexanpassung) geschieht vorzugsweise in zwei Stufen. Direkt bei der Mehrschichtfolie, in dem Bereich, welcher durch die OCT-Vorrichtung ausgewertet wird (Messbereich), sollte die Impedanzanpassung besonders effektiv sein. Etwas weiter weg, also im Abstand von zum Beispiel grösser 1 mm, kann die Impedanzanpassung weniger effektiv sein, da die dabei entstehenden Reflexionen nicht mehr im erfassten Interferenzbereich liegen. Die zu messende Mehrschichtfolie wird dabei bevorzugt zwischen zwei transparente Kontaktblöcke gefasst. Dabei wird bei der Auswahl des Materials für die Kontaktblöcke beziehungsweise Kontaktrollen darauf geachtet, dass dieses Material einen Brechungsindex hat, welcher in der Nähe desjenigen des Folienmaterials liegt. Auf der Seite des ersten Kontaktblockes, auf welcher die elektromagnetische Strahlung eintritt, wird die Reflexion an der Eintrittsfläche in den Kontaktblock verringert oder vermieden, indem diese Fläche beispielsweise durch eine passende Beschichtung entspiegelt wird oder indem diese Fläche bezogen auf die Strahlungsachse leicht schräg gestellt wird, sodass die Reflexion nicht mehr zurück gespiegelt wird.

Die optische Impedanzanpassung vom Kontaktblock zu der Mehrschichtfolie wird dabei bevorzugt mittels eines Immersionsfluides durchgeführt, welches derart auf die Kontaktblöcke oder auf die Mehrschichtfolie, insbesondere auf die beiden äusseren Oberflächen der Mehrschichtfolie aufgebracht wird, dass über das Immersionsfluid ein direkter (luftfreier) Kontakt zwischen der Mehrschichtfolie und der ersten und insbesondere auch der zweiten Transportrolle hergestellt wird. Mit dem Immersionsfluid wird die Reflexion durch den verbleibenden Unterschied der Brechungsindizes von Mehrschichtfolie und Kontaktblock weiter minimiert. Vor allem aber verdrängt das Immersionsfluid die Luft (mit n = 1.0) aus dem Kontaktbereich von Mehrschichtfolie und Kontaktblock.

Weil die erfindungsgemässe Vorrichtung vorzugweise nicht für jeden Folientyp andere Materialien für Kontaktrollen und Immersionsfluid verwenden soll, werden Kontaktrollen zum Beispiel aus PMMA oder Glas verwendet, mit Brechungsindizes zwischen 1.47 und 1.53, welche einem Brechungsindex in der Nähe der normalen Brechungsindizes von Folienmaterialien von 1.47 bis 1.54 entsprechen. Das Immersionsfluid ist vorzugsweise so zu wählen, dass es einen ähnlichen Brechungsindex wie die Transportrollen aufweist. Ein erster Brechungsindex $n_a$ der ersten Transportrolle (und gegebenenfalls der zweiten Transportrolle) sollte im Wesentlichen gleich einem zweiten Brechungsindex $n_b$ des Immersionsfluides sein. Wie vorangehend erwähnt sollte der Brechnungsindex des Immersionsfluides im Wesentlichen gleich / ähnlich dem der Mehrschichtfolie sein, sodass ein starker "Brechungsindexübergang" vermieden wird. Insbesondere kann ein Verhältnis von na zu nb zwischen 0.9 und 1.1, besonders bevorzugt zwischen 0.95 und 1.05 liegen. Sei $n_a$ der Brechungsindex des Materials des Kontaktblockes, $n_b$ der Brechungsindex der Immersionsflüssigkeit und $n_c$ der Brechungsindex der äusseren Schicht der Mehrschichtfolie. Vorzugsweise wird der Brechungsindex des Immersionsfluides so gewählt, dass die Abweichung von den Brechungsindizes der Materialien der Folie und der Kontaktblöcke möglichst klein ist. Insbesondere kann ein Verhältnis von $n_a$ zu $n_b$, sowie von $n_b$ zu $n_c$ zwischen 0.9 und 1.1, besonders bevorzugt zwischen 0.95 und 1.05 liegen.

Um die Reflexion an einem Übergang von der Transportrolle zum Immersionsfluid und diejenige vom Immersionsfluid zur Mehrschichtfolie im gleichem Mass zu reduzieren, kann der Brechungsindex des Immersionsfluids n(Immersionsfluid) (auch $n_b$) gleich einem geometrischen Mittel der Brechungsindizes von Mehrschichtfolie und Transportrolle gewählt werden:

$$n\,(Immersionsfluid) = \sqrt{n\,(Transportrolle) \times n(Mehrschichtfolie)}$$

Dabei entspricht n(Mehrschichtfolie) dem Brechungsindex der Mehrschichtfolie und ist vorzugsweise der Brechungsindex eines Materials der Mehrschichtfolie an einer Aussenseite der Mehrschichtfolie. n(Transportrolle) (auch $n_a$) ist der Brechungsindex der Transportrolle.

Die erste und zweite Transportrolle umfassen vorzugsweise das gleiche Material, sodass sie einen weitgehend identischen Brechungsindex aufweisen. Als Material für die Kontaktblöcke / Transportrollen kommen zum Beispiel Glas und/oder Acrylglas (chemisch Polymethylmethacrylat, Kurzzeichen PMMA), insbesondere Plexiglas ® in Frage.

Für die erfindungsgemässe Vorrichtung kann in der Praxis ein Fluidspender bereitgestellt werden, welcher derart vorgesehen ist, dass zur Ausbildung einer Immersionsfluidschicht zwischen der Mehrschichtfolie und dem Kontaktblock im Betriebszustand die Mehrschichtfolie mit dem Immersionsfluid aus dem Fluidspender beaufschlagbar ist und die elektromagnetische Primärstrahlung aus dem ersten Kontaktblock über die Immersionsfluidschicht auf die Mehrschichtfolie führbar ist.

Das Immersionsfluid kann also während dem Betrieb aus dem Fluidspender auf die Mehrschichtfolie aufgebracht werden, um die Immersionsfluidschicht zwischen der Mehrschichtfolie und dem Kontaktblock auszubilden und aufrechtzuerhalten. Insbesondere kann das Immersionsfluid kontinuierlich während der laufenden Produktion auf die die Messstelle durchlaufende Mehrschichtfolie aufgebracht werden. Prinzipiell reicht es aus, wenn die Mehrschichtfolie zumindest an dem Messpunkt mit dem Immersionsfluid benetzt ist, sodass der direkte (luftfreier) Kontakt zumindest am Messpunkt zwischen der Mehrschichtfolie und der Transportrolle (den Transportrollen) hergestellt wird.

Als Immersionsfluid sind unter anderem Immersions-Flüssigkeiten mit n = 1.49-1.53 geeignet. Ein Immersionsfluid kann ein Immersionsöl sein und unter anderem Benzylbenzoat, Allylalkohol und/oder Glycerin umfassen.

Durch das Benetzen der Mehrschichtfolie mit dem Immersionsfluid wird für die Lichtwellen eine Anpassung der Wellenimpedanz beziehungsweise des Brechungsindex von Kontaktblock zu Mehrschichtfolie erreicht. Wird die Folie eingetaucht in Immersionsfluid mit dem Brechungsindex 1.53 so sinkt die Reflexion um den Faktor 1000 auf 0.004%. Für eine stabile Positionierung der Mehrschichtfolie in der Vorrichtung wird bevorzugt eine Anordnung mit der ersten und zweiten Transportrolle verwendet, sodass ein Aufbau aus Transportrolle-Immersionsfluid-Mehrschichtfolie-Immersionsfluid-Transportrolle erhalten wird.

In einer bevorzugten Ausführungsform kann das Immersionsfluid auch auf den Kontaktblock (erster und / oder zweiter) aufgebracht werden, wobei das Immersionsfluid indirekt über den Kontaktblock auf die Mehrschichtfolie gelangt.

Im Rahmen der Erfindung umfassen die erste Transportrolle und insbesondere auch die zweite Transportrolle die elastische Beschichtung auf der ersten und respektive der zweiten Transportfläche. Die elastische Beschichtung ist für die elektromagentische Primärstrahlung transparent und besitzt vorzugsweise einen ähnlichen oder gleichen Brechungsindex wie das Material der Transportrollen. Die elastische Beschichtung kann inbesondere ein elastisches Polymer umfassen. Im Betriebszustand können die erste Transportrolle und die zweite Transportrolle derart einen Druck aufeinander ausüben, dass ein Abstand zwischen den Transportrollen und der Mehrschichtfolie durch die elastische Beschichtung minimiert wird und die Luft vollständig aus einem Kontaktbereich von Transportrolle und Mehrschichtfolie und somit aus dem Messbereich verdrängt wird.

In Ausgestaltung der Erfindung kann die Strahlungsquelle derart an einer Seite des ersten Kontaktblockes / der ersten Transportrolle angeordnet sein, dass die elektromagnetischer Primärstrahlung entlang einer Achse in den ersten Kontaktblock führbar ist. Dabei ist ein Reflektor so verdreht zu der Achse angeordnet, dass die elektromagnetischer Primärstrahlung auf die Mehrschichtfolie fokussierbar ist, wobei die Strahlungsquelle insbesondere an dem ersten Kontaktblock angeordnet ist, sodass die Primärstrahlung berührungsfrei, insbesondere durch ein reflexfreies Fenster oder eine reflexfreie Linse in den Kontaktblock eingekoppelt werden kann.

Der Reflektor kann mittels eines feststehenden Trägerkörpers in der ersten Transportrolle angeordnet sein. Im Betriebszustand ist der Reflektor somit statisch, wobei die erste Transportrolle um den feststehenden Trägerkörper rotiert. In einem Rotationsspalt zwischen dem Trägerkörper und der um den Trägerkörper rotierbarenden ersten Transportrolle ist vorzugsweise das Immersionsfluid zur Unterdrückung einer Reflexion zwischen Trägerkörper und Transportrolle durch Vermeidung eines Brechungsindexwechsels an deren Materialübergang angeordnet. So werden beim Durchlauf der Primärstrahlung durch die Transportrolle zur Mehrschichtfolie die Reflexionen weiter minimiert.

In der Praxis kann der Reflektor in dem Trägerkörper angeordnet sein. Hierbei kann der Trägerkörper ein festes Material umfassen, welches feste Material für die elektromagnetische Strahlung transparent ist. Der Reflektor ist dann in das feste Material eingegossen. Alternativ kann der Trägerkörper mit dem Immersionsfluid befüllt sein, sodass der Reflektor im Immersionsfluid eingetaucht ist. Der Trägerkörper besitzt besonders vorteilhaft eine für die elektromagnetische Strahlung transparente geschlossene zylindrische Oberfläche, damit durch die Drehbewegung der Transportrolle um den Trägerkörper keine Wirbel im Immersionsfluid entstehen. Ein Innenraum dieses Trägerkörpers ist vorteilhaft mit einem Immersionsfluid gefüllt. Auf diese Weise ist für den ganzen Weg der elektromagnetischen Strahlung (Primärstrahlung und insbesondere auch Sekundärstrahlung), vom einem Eintrittsfenster (des Kontaktblockes) in den Kontaktblock bis zum Messpunkt auf der Mehrschichtfolie, der ganze Raum ausgefüllt mit Material mit annähernd gleichem Brechungsindex.

Der Reflektor kann als ein Spiegel, insbesondere als ein Parabolspiegel ausgestaltet sein, welcher die Primärstrahlung auf die Mehrschichtfolie, insebesondere auf den Messpunkt an der Mehrschichtfolie fokussiert.

In einer besonders bevorzugten Ausführungsform wird die zu messende Mehrschichtfolie zwischen den zwei transparenten Transportrollen hindurchgefördert. Ein aufgeweiteter paralleler Laserstrahl wird axial in die erste transparente Transportrolle eingeführt und durch einen Off-Axis-Parabolspiegel auf die Peripherie der ersten Transportrolle fokussiert, genau auf die Berührungslinie mit der zweiten Transportrolle, beziehungsweise auf die Mitte der Mehrschichtfolie, welche zwischen den beiden Rollen transportiert wird. Um starke Reflexionen an den Aussenflächen der Mehrschichtfolie zu vermeiden, wird auf beiden Seiten der Mehrschichtfolie zwischen die Oberflächen der Mehrschichtfolie und die Transportrollen das Immersionsfluid aufgebracht.

Das erfindungsgemässe Verfahren / die erfindungsgemässe Vorrichtung kann für eine Offline-Messung (ausserhalb des Produktionsbetriebes) an einem Folienmuster der Mehrschichtfolie verwendet werden. Dabei wird die Mehrschichtfolie vorzugsweise kraftschlüssig zwischen dem ersten Kontaktblock und dem zweiten Kontaktblock gefördert, wobei eine Messung mittels der Strahlungsquelle und des Detektors erfolgt.

Das erfindungsgemässe Verfahren / die erfindungsgemässe Vorrichtung kann für eine Online-Messung (während des Produktionsbetriebes) an einem am Rand oder an beiden Rändern der flachgelegten Mehrschichtfolie verwendet werden. Dabei wird die Mehrschichtfolie vorzugsweise durch feststehende Kontaktblöcke (z.B. aus Glas) hindurchgezogen oder zwischen der ersten Transportrolle und der zweiten Transportrolle hindurch gefördert. Die Transportrollen können hierbei entweder durch die Mehrschichtfolie passiv mitgedreht werden oder die Transportrollen können aktiv synchron zur Mehrschichtfolie mitgedreht werden.

Da an einem Rand der flachgelegten Mehrschichtfolie oft einige Zentimeter weggeschnitten werden, kann hier besonders bevorzugt ein Immersionsfluid verwendet werden. Weil Barrierefolie aus verschiedenen Materialien besteht (Polyethylen (PE), Polyamid (PA), Ethylen-Vinylalkohol-Copolymer (EVOH),...) und somit nicht sortenrein ist, ist ein Recyclieren der Mehrschichtfolie meist nicht möglich. Das Immersionsfluid wird somit nach der erfolgten Messung zusammen mit dem weggeschnittenen Randstreifen entsorgt, ohne dass es von der Mehrschichtfolie entfernt werden muss.

Da eine Rollenlänge einer Mehrschichtfolienrolle einige Kilometer betragen kann, ist der Bedarf an Immersionfluid für diese Art der Anwendung sehr gross. Für diese Anwendung kann die Verwendung der elastischen Beschichtung auf der ersten und / oder zweiten Transportrolle vorteilhaft sein (oder eine komplette elastische Transportrolle), da durch die elastische Beschichtung die Luft zwischen Mehrschichtfolie und Transportrolle verdrängt werden kann, um einen Brechungsindexwechsel zu vermeiden, zumindest in dem Bereich in welchem die Messung stattfindet.

Das TD-OCT Verfahren kann eine grössere Dynamik der Interferenz-Signale tolerieren und es kann somit vorzugsweise ganz auf die Immersion verzichtet werden. Für die Online-Messungen sind die TD-OCT in der Regel zu langsam, weswegen für Online-Messungen vorzugsweise ein FD-OCT-Verfahren verwendet wird.

Die erfindungsgemässe Vorrichtung und das erfindungsgemässe Verfahren zur Bestimmung der Schichtdicke in der Mehrschichtfolie kann dazu verwendet werden, Grenzflächen einzelner Schichten im Innern der Folie (Mehrschichtfolie) mittels FD-OCT zu detektieren. Die Folie wird vorzugsweise mit dem Immersionsfluid zwischen zwei optischen Kontaktblöcken so eingebettet, dass keine Reflexionen an der Oberfläche der Folie entstehen, welche die Reflexionen an den inneren Grenzflächen übersteuern. Die Vorrichtung verwendet vorzugweise die Kontaktblöcke in Form von Rollen (Transportrolle). Die Ein- und Auskopplung der Strahlung (Primär- und Sekundärstrahlung) erfolgt axial über die erste Rolle, wobei ein Spiegel die Strahlung aus dem Innern dieser Rolle auf die zu messende Folie lenkt.

Im Folgenden werden die Erfindung und der Stand der Technik anhand von Ausführungsbeispielen unter Bezugnahme auf die Zeichnungen näher erläutert.

Fig. 1a     eine schematische Darstellung einer erfindungsgemässen Vorrichtung zur Bestimmung einer Schichtdicke in einer Mehrschichtfolie;

Fig. 1b     eine schematische Darstellung einer erfindungsgemässen Vorrichtung zur Bestimmung einer Schichtdicke in einer Mehrschichtfolie mit einer Plankonvexlinse;

Fig. 2     eine Seitenansicht einer erfindungsgemässen Vorrichtung zur Bestimmung einer Schichtdicke in einer Mehrschichtfolie mit einem Fluidspender;

Fig. 3      eine schematische Darstellung einer Mehrschichtfolie zwischen zwei Kontaktblöcken;

Fig. 4      eine Darstellung eines A-Scans mit Bezug auf eine Mikro-Fotografie eines Folienquerschnittes;

Fig. 5a     eine schematische Darstellung einer erfindungsgemässen Vorrichtung mit einer Linse;

Fig. 5b     eine schematische Darstellung der erfindungsgemässen Vorrichtung gemäss Fig. 5a mit Fluidspender;

Fig. 6      eine schematische Darstellung einer erfindungsgemässen Vorrichtung mit zwei Transportrollen.

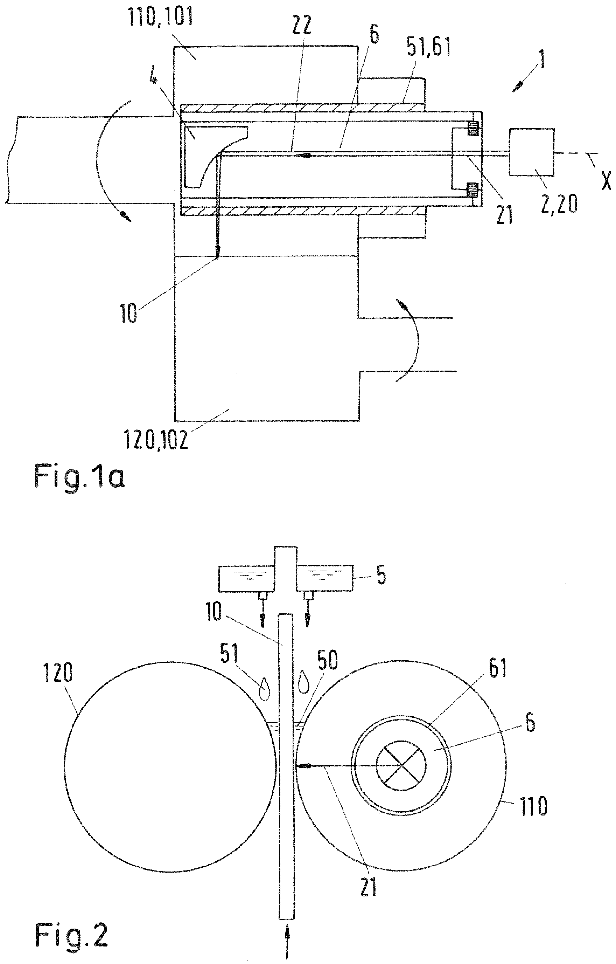

Figur 1a zeigt eine schematische Darstellung einer erfindungsgemässen Vorrichtung 1 zur Bestimmung einer Schichtdicke in einer Mehrschichtfolie 10.

Die Vorrichtung 1 umfasst dabei eine Strahlungsquelle 2, welche als Laser ausgestaltet sein kann. Die Strahlungsquelle 2 erzeugt im Betriebszustand eine elektromagnetische Primärstrahlung 21. Die Vorrichtung umfasst ausserdem einen Detektor (hier nicht gezeigt) zur Erfassung einer von der Mehrschichtfolie 10 emittierten elektromagnetischen Sekundärstrahlung 22, welche Sekundärstrahlung 22 durch eine Wechselwirkung der Primärstrahlung 21 mit der Mehrschichtfolie 10 induziert ist. Wird das erfindungsgemässe Verfahren als OCT-Verfahren durchgeführt kann die Vorrichtung ausserdem ein Interferometer umfassen, wobei der Detektor dann ein Interferenzspektrum erfasst. Hierfür umfasst eine Einheit 2, 20 den Laser 2 als Strahlungsquelle, sowie das Interferometer und eine OCT-Auswerteeinheit mit dem Detektor.

Ausserdem umfasst die Vorrichtung 1 eine erste für die elektromagnetische Primärstrahlung transparente Transportrolle 110 mit einer ersten Kontaktfläche 101 zur Herstellung eines Kontaktes mit der Mehrschichtfolie 10.

Die Strahlungsquelle 2 ist derart an einer Seite der ersten Transportrolle 110 angeordnet, dass die elektromagnetischer Primärstrahlung 21 entlang einer Achse X in die Transportrolle 110 führbar ist.

Ausserdem umfasst die Vorrichtung 1 eine zweite für die elektromagnetische Primärstrahlung transparente Transportrolle 120 mit einer zweiten Kontaktfläche 102 zur Herstellung eines Kontaktes mit der Mehrschichtfolie 10. Die Mehrschichtfolie 10 ist zwischen der ersten Kontaktfläche 101 und der zweiten Kontaktfläche 102 angeordnet. Durch Rotation der ersten und zweiten Transportrolle 110, 120 kann die Mehrschichtfolie 10 im Betriebszustand bewegt werden.

In der Transportrolle ist ein Off-Axis-Parabolspiegel angeordnet, der verdreht zu der Achse X steht, sodass die elektromagnetischer Primärstrahlung 21 auf die Mehrschichtfolie 10 fokussiert wird. Die Strahlungsquelle 2 strahlt von aussen in die Seite der Transportrolle 110. Nach der Wechselwirkung der Primärstrahlung 21 mit der Mehrschichtfolie 10 wird die Primärstrahlung 21 als Sekundärstrahlung 22 von der Mehrschichtfolie 10 reflektiert und in der Einheit 2, 20 mit der OCT-Auswerteeinheit, sowie dem Interferometer und dem Detektor erfasst.

Der Parabolspiegel 4 ist mittels eines feststehenden Trägerkörpers 6 in der ersten Transportrolle 110 angeordnet, und in einem Rotationsspalt 61 zwischen dem Trägerkörper 6 und der um den Trägerkörper 6 rotierbaren ersten Transportrolle 110 ist das Immersionsfluid 51 zur Unterdrückung einer Reflexion durch Vermeidung eines Brechungsindexwechsels an einer Materialgrenze angeordnet. Ein Raum des Trägerkörpers 6, in welchem der Parabolspiegel 4 angeordnet ist kann entweder mit Immersionsfluid befüllt sein, oder der Parabolspiegel 4 kann in ein Material des Trägerkörpers 6 eingelassen sein.

Die Transportrolle 110 rotiert im Betriebszustand also um dem Trägerkörper 6. Die Transportrolle 110 ist gegenüber dem Trägerkörper 6 folglich drehbar gelagert. Auch der Trägerkörper 6 ist mit dem Immersionsfluid 51 gefüllt.

Die zweite Transportrolle 120 besteht vorzugsweise aus einem Material mit den gleichen oder ähnlichen optischen Eigenschaften wie die erste Transportrolle 110 und das Immersionsfluid 51 (ähnlicher / gleicher Brechungsindex). Eine Oberfläche der zweiten Transportrolle kann auch absorbierend sein, damit möglichst keine Reflexionen entstehen.

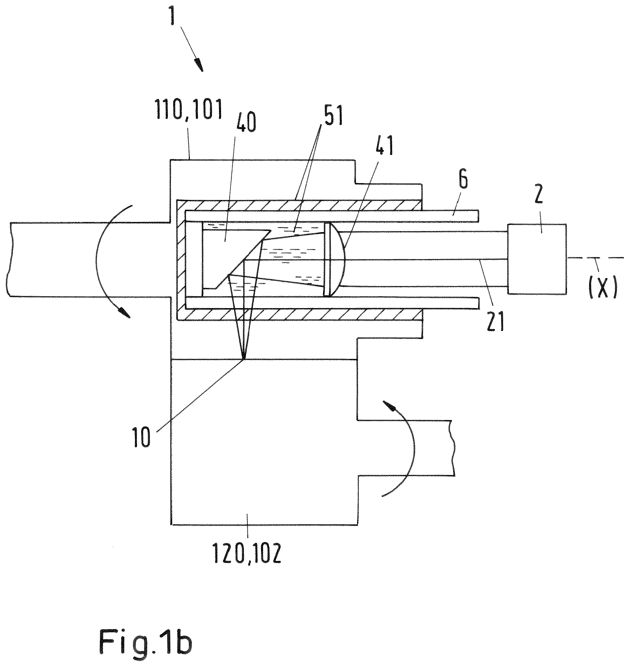

Fig. 1b zeigt eine schematische Darstellung einer erfindungsgemässen Vorrichtung 1 zur Bestimmung einer Schichtdicke in einer Mehrschichtfolie mit einer Plankonvexlinse 41. Bei Fig. 1b wird wie bei Fig. 1a die Primärstrahlung 21 axial entlang der Achse X in die Transportrolle 110 eingekoppelt. Diese Primärstrahlung 21 kann ein aufgeweiteter Laserstrahl sein. Dieser wird durch die Plankonvexlinse 41 fokussiert und ein Fokuspunkt der Plankonvexlinse 41 wird durch einen planen Spiegel 40 auf einen Messpunkt in der Mehrschichtfolie 10 gelenkt.

Der Raum zwischen der Plankonvexlinse 41 und dem Spiegel 40 kann durch das Immersionsfluid 51 gefüllt sein, um Reflexionen durch Brechungsindexübergänge zu vermeiden. Die Plankonvexlinse 41 ist vorzugsweise auf einer der Luft zugewandten Seite entspiegelt.

Im Vergleich mit Fig. 1a gibt es bei Fig. 1b mehr Freiheit in einer Wahl einer Apertur einer Einstrahlung der Primärstrahlung 21 auf den Messpunkt als mit einem Parabolspiegel gemäss Fig. 1a.

Fig. 2 zeigt eine Seitenansicht einer erfindungsgemässen Vorrichtung 1 zur Bestimmung einer Schichtdicke in der Mehrschichtfolie 10 mit einem Fluidspender 5.

Der Fluidspender 5 ist derart vorgesehen, dass zur Ausbildung einer Immersionsfluidschicht 50 zwischen der Mehrschichtfolie 10 und der ersten Transportrolle 110 / zweiten Transportrolle 120 das Immersionsfluid 51 aus dem Fluidspender 5 ausgebracht werden kann. So kann die elektromagnetische Primärstrahlung 21 aus der ersten Transportrolle 110 über die Immersionsfluidschicht 50 auf die Mehrschichtfolie 10 geführt werden. Hierfür wird die Primärstrahlung 21 seitlich in den Trägerkörper und somit in die Transportrolle 110 eingebracht.

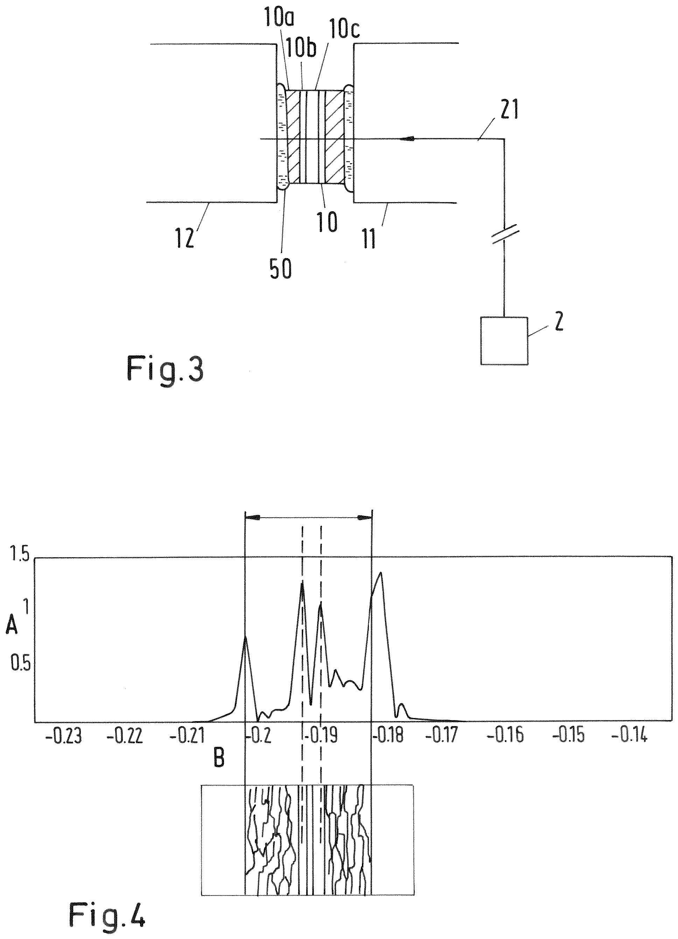

Fig. 3 zeigt eine schematische Darstellung der Mehrschichtfolie 10 zwischen zwei Kontaktblöcken 11, 12.

Die Mehrschichtfolie 10 ist zwischen dem ersten Kontaktblock 11 und dem zweiten Kontaktblock 12 eingespannt. Die Primärstrahlung 21 wird von der Strahlungsquelle 2 durch den Kontaktblock 11 auf die Mehrschichtfolie 10 gestrahlt.

Die Mehrschichtfolie 10 umfasst mehrere verschiedene Einzelschichten 10a, 10b, 10c mit verschiedenen Einzelschichtdicken. In der Praxis kann die Mehrschichtfolie 10 zum Beispiel eine Barrierfolie sein mit einer EVOH Schicht (Ethylen-Vinylalkohol-Copolymer) 10c, zwei Bindeschichten 10 b und zwei PE-Schichten (Polyethylen) 10a.

Die von den Übergängen zwischen den Einzelschichten 10a, 10b und 10c reflektierten Strahlen bilden die Sekundärstrahlung, welche im Detektor erfasst wird. So können die verschiedenen Einzelschichtdicken aus einem A-Scan einer OCT-Messung bestimmt werden.

Fig. 4 zeigt eine Darstellung eines A-Scan einer PA/EVOH/PA Mehrschichtfolie mit Bezug auf eine Mikro-Fotografie eines Folienquerschnittes.

B zeigt dabei die Position in Richtung der Primärstrahlung, also in die Tiefe der Mehrschichtfolie. A zeigt eine Amplitude der Reflexion (Sekundärstrahlung), beziehungsweise ein Signal proportional zur Interferenz der reflektierten Sekundärstrahlung mit einem Referenzstrahl. Diese Darstellung der Messung in Richtung der Primärstrahlung wird als A-Scan bezeichnet. Aus dem OCT-A-Scan können verschiedene Einzelschichtdicken von Einzelschichten in der Mehrschichtfolie direkt ausgelesen werden.

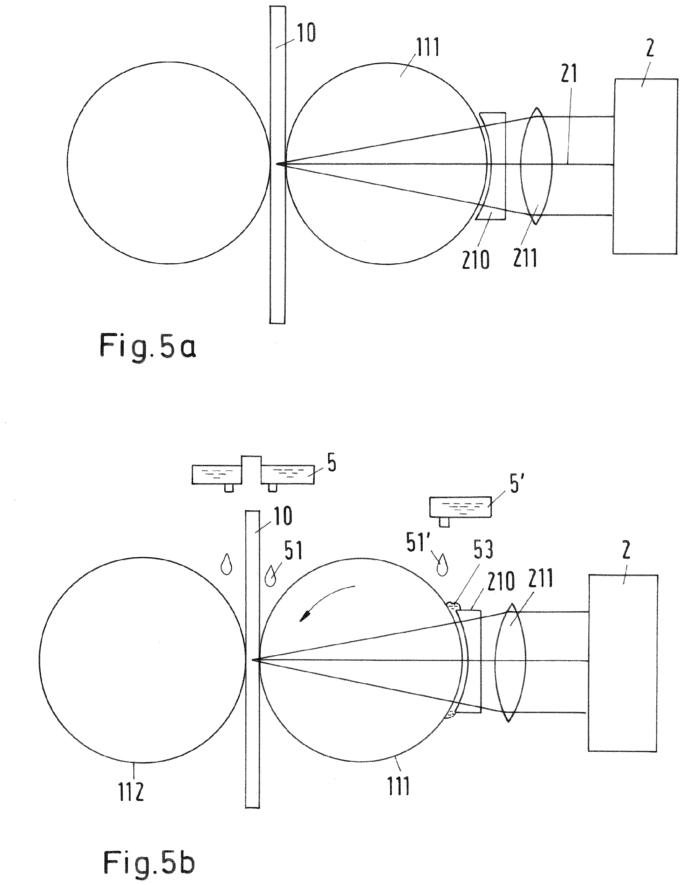

Fig. 5a zeigt eine schematische Darstellung einer erfindungsgemässen Vorrichtung mit einer Linse.

Die Primärstrahlung 21 wird in Form von elektromagnetischer Strahlung, vorzugsweise in Form von breitbandigem Laserlicht in der erfindungsgemässen Vorrichtung zum Messen der Einzelschichten und der Gesamtdicke der Mehrschichtfolie 10 eingekoppelt. Auf dem gleichen Weg wird die von der Mehrschichtfolie 10 und allen Indexübergängen erzeugten Reflexionen als Sekundärstrahlung wieder zurückgestrahlt.

Die Primärstrahlung 21 wird von der Strahlungsquelle 2 durch eine (Sammel-)-Linse 211 durch den für die elektromagnetische Strahlung durchlässigen Kontaktblock 111 auf die zu messende Mehrschichtfolie 10 fokussiert. Der Kontaktblock 111 ist als eine zylindrische Rolle ausgestaltet und kann insbesondere eine Transportrolle sein. Eine Wirkung der konvex-zylindrischen Oberfläche der Rolle auf den Strahlenverlauf wird mittels einer zylindrische Plankonkav-Linse 210 kompensiert.

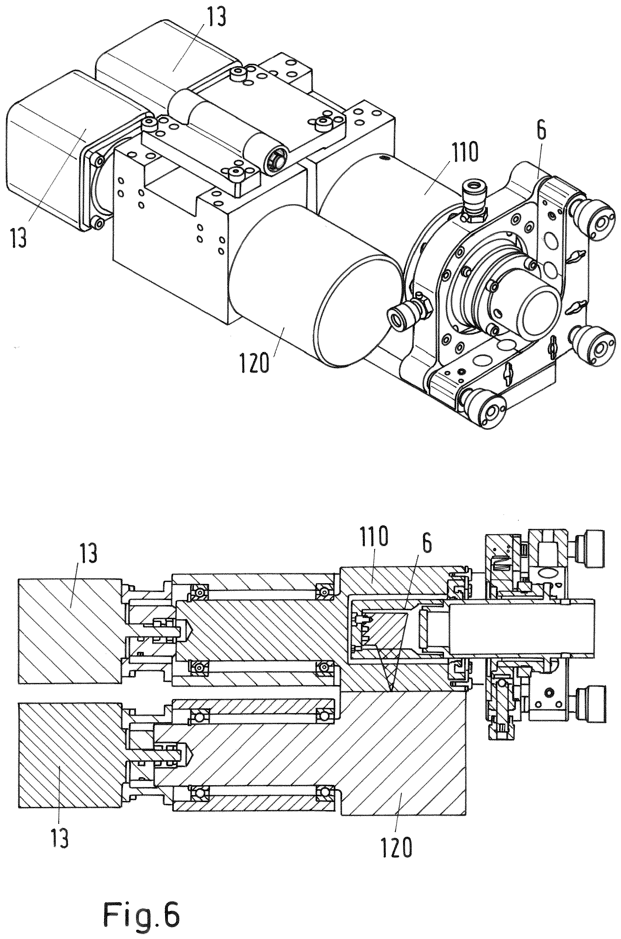

Der Kontaktblock 111 für diese Art der Ankopplung gemäss Fig. 6 wird, anders als eine Transportrolle bei welcher eine Einkopplung der Primärstrahlung durch die Längsachse (also von der Seite ) wie in Fig. 1 und Fig. 2 dargestellt, erfolgt, ohne zentrale Bohrung für die Aufnahme eines Trägers ausgeführt.

Fig. 5b zeigt eine schematische Darstellung der erfindungsgemässen Vorrichtung gemäss Fig. 5a mit Fluidspender 5, 5'.

Ein Spalt zwischen dem zylindrischen Kontaktblock 111 und der Plan-konkav-Linse 210 wird durch ein Immersionsfluid 51' gefüllt, um Reflexionen an den Grenzflächen zu vermeiden. Der Brechungsindex dieses Immersionsfluids 51' muss nicht gleich sein wie derjenige des Immersionsfluids 51, welches in Kontakt mit der Mehrschichtfolie 10 ist, sondern wird passend zum Kontaktblock 111 und zur Plan-konkav-Linse 210 gewählt.

Wenn die Kontaktblöcke 111, 112 als drehende Transportrollen ausgeführt sind, welche die Mehrschichtfolie 10 zwischen den Transportrollen fördern, so muss das Immersionsfluid 51' genügend dünnflüssig sein.

Es kann aus einem Reservoir 5' in genügender Menge in den Spalt zwischen dem Kontaktblock 111 und der zylindrischen Plan-konkav-Linse 210 gefördert werden um eine Immersionsfluidschicht 53 auszubilden, welche einen weitgehend luftfreien Kontakt zwischen dem Kontaktblock 111 und der zylindrischen Plan-konkav-Linse 210 zumindest im Strahlengang des Primärstrahls erzeugt.

Fig. 6 zeigt eine schematische Darstellung einer erfindungsgemässen Vorrichtung mit zwei Transportrollen 110, 120.

Die Transportrollen 110, 120 werden von Schrittmotoren 13 angetrieben. Der Trägerkörper 6 wird von einer Feinjustier-Einrichtung getragen. Die zweite Transportrolle 120 ist pendelnd so aufgehängt, dass sie mit einem gewissen Druck auf die Mehrschichtfolie pressen kann. Der Druck muss so gewählt werden, dass nur noch ein kleiner Spalt zwischen Mehrschichtfolie und Transportrollen vorhanden ist beziehungsweise dass ein guter optischer Kontakt gewährleistet ist und dass für den Transport der Mehrschichtfolie eine ausreichend grosse Kraft auf die Mehrschichtfolie wirken kann. Dabei soll die zu messende Folie aber nicht gequetscht werden.

**Patentansprüche**

**1.** Optische Kohärenztomographie-Vorrichtung zur Bestimmung einer Schichtdicke in einer Mehrschichtfolie (10) umfassend:

• eine Strahlungsquelle (2) zur Erzeugung einer elektromagnetischen Primärstrahlung (21),

• einen Detektor zur Erfassung einer von der Mehrschichtfolie (10) emittierten elektromagnetischen Sekundärstrahlung, welche Sekundärstrahlung durch eine Wechselwirkung der Primärstrahlung (21) mit der Mehrschichtfolie (10) induziert ist,

• eine um eine erste Rotationsachse rotierbare, für die elektromagnetische Primärstrahlung transparente erste Transportrolle (110) mit einer ersten Transportfläche (101) zur Herstellung eines Kontaktes mit der Mehrschichtfolie (10) und eine zweite Transportrolle (120) mit einer zweiten Transportfläche (102) zum Transport der Mehrschichtfolie (10), wobei die erste Transportfläche (101) und die zweite Transportfläche (102) zum Transport der Mehrschichtfolie (10) dienen, welche zwischen der ersten und der zweiten Transportfläche (101, 102) anordnenbar ist,

• sowie ein Interferometer zur Aufteilung einer von der Strahlungsquelle (2) erzeugbaren Quellstrahlung in die elektromagnetische Primärstrahlung (21) und einen Referenzstrahl mittels eines Strahlteilers des Interferometers und zum Überlagern der Sekundärstrahlung mit dem Referenzstrahl,

wobei die Strahlungsquelle (2) derart an der ersten Transportrolle (110) angeordnet ist, dass die elektromagnetische Primärstrahlung (21) aus der ersten Transportrolle (110) auf die Mehrschichtfolie (10) führbar ist,

wobei die erste Transportrolle (110) eine elastische Beschichtung auf der ersten Transportfläche (101) umfasst, wobei die elastische Beschichtung für die elektromagnetische Primärstrahlung (21) transparent ist und wobei die Vorrichtung so ausgestaltet ist, dass in einem Betriebszustand die erste Transportrolle (101) und die zweite Transportrolle (120) derart einen Druck aufeinander ausüben können, dass ein Abstand zwischen der ersten Transportrolle (110), der zweiten Transportrolle (120) und der Mehrschichtfolie (10) durch die elastische Beschichtung minimiert wird und die Luft vollständig aus einem Kontaktbereich der ersten Transportrolle (110) und der Mehrschichtfolie (10) und somit aus dem Messbereich verdrängt wird.

2. Vorrichtung nach Anspruch 1 umfassend ein Fluidspender (5), welcher derart vorgesehen ist, dass zur Ausbildung einer Immersionsfluidschicht (50) zwischen der Mehrschichtfolie (10) und der ersten Transportrolle (110) im Betriebszustand die Mehrschichtfolie (10) mit einem Immersionsfluid (51) aus dem Fluidspender (5) beaufschlagbar ist und die elektromagnetische Primärstrahlung (21) aus der ersten Transportrolle (110) über die Immersionsfluidschicht (50) auf die Mehrschichtfolie (10) führbar ist.

3. Vorrichtung nach Anspruch 1 oder 2, wobei die Strahlungsquelle (2) derart an einer Seite der ersten Transportrolle (110) angeordnet ist, dass die elektromagnetischer Primärstrahlung (21) entlang einer Achse (X) in die erste Transportrolle (110) führbar ist und ein Reflektor (4, 40) so verdreht zu der Achse (X) angeordnet ist, dass die elektromagnetische Primärstrahlung (21) auf die Mehrschichtfolie (10) fokussierbar ist.

4. Vorrichtung nach Anspruch 3, wobei der Reflektor (4, 40) mittels eines feststehenden Trägerkörpers (6) in der ersten Transportrolle (110) angeordnet ist, und in einem Rotationsspalt (61) zwischen dem Trägerkörper (6) und der um den Trägerkörper rotierbaren ersten Transportrolle (110), ein Immersionsfluid zur Unterdrückung einer Reflexion durch Vermeidung eines Brechungsindexwechsels an einer Materialgrenze angeordnet ist.

5. Vorrichtung nach Anspruch 4, wobei der Reflektor (4, 40) in dem Trägerkörper (6) angeordnet ist und der Trägerkörper (6) aus einem festen Material besteht oder mit dem Immersionsfluid (51) befüllt ist.

6. Vorrichtung nach einem der Ansprüche 3 bis 5, wobei der Reflektor (4, 40) ein Spiegel (4), insbesondere ein Parabolspiegel (4), im speziellen ein Off-Axis-Parabolspiegel ist.

7. Vorrichtung nach einem der vorangehenden Ansprüche, wobei die Strahlungsquelle (2) ein Laser ist.

8. Vorrichtung nach einem der vorangehenden Ansprüche, wobei die Strahlungsquelle (2) eine Breitbandlichtquelle ist.

9. Verfahren zur Bestimmung einer Schichtdicke in einer Mehrschichtfolie (10) mit einer Vorrichtung nach einem der Ansprüche 1 bis 8 umfassend:

• Herstellen des Kontaktes zwischen der ersten Transportfläche (101) und der Mehrschichtfolie (10),

• Führen der elektromagnetischen Primärstrahlung (21) aus der ersten Transportrolle (110) auf die Mehrschichtfolie (10),

• Erfassung der von der Mehrschichtfolie (10) emittierten elektromagnetischen Sekundärstrahlung, welche Sekundärstrahlung durch eine Wechselwirkung der Primärstrahlung (21) mit der Mehrschichtfolie (10) induziert ist.

**10.** Verfahren nach Anspruch 9, wobei ein Immersionsfluid (51) aus einem Fluidspender (5) auf die Mehrschichtfolie (10) zur Ausbildung einer Immersionsfluidschicht (50) zwischen die Mehrschichtfolie (10) und der ersten Transportrolle (110) ausgebracht wird.

**11.** Verfahren nach Anspruch 9 oder 10, wobei die Sekundärstrahlung eine von der Mehrschichtfolie (10) transmittierte oder eine von der Mehrschichtfolie (10) reflektierte Sekundärstrahlung ist.

**12.** Verfahren nach Anspruch 10, wobei ein erster Brechungsindex $n_a$ der ersten Transportrolle (11, 110, 111) im Wesentlichen gleich einem zweiten Brechungsindex $n_b$ des Immersionsfluides (51) ist und gleichzeitig im Wesentlichen gleich einem dritten Brechungsindex $n_c$ der Oberflächenschicht (10a) der Mehrschichtfolie (10) ist und insbesondere ein Verhältnis von $n_a$ zu $n_b$ gleich einem Verhältnis von $n_b$ zu $n_c$ ist und und zwischen 0.9 und 1.1, besonders bevorzugt zwischen 0.95 und 1.05 liegt.

**Claims**

**1.** An optical coherence tomography device for determining a layer thickness in a multilayer film (10) comprising:

• a radiation source (2) for the generation of an electromagnetic primary radiation (21),
• a detector for detecting an electromagnetic secondary radiation emitted from the multilayer film (10), which secondary radiation is induced by an interaction of the primary radiation (21) with the multilayer film (10),
• a first transport roller (110) rotatable about a first rotation axis and transparent to the electromagnetic primary radiation, having a first transport surface (101) for making a contact with the multilayer film (10), and a second transport roller (120) having a second transport surface (102) for transporting the multilayer film (10), wherein the first transport surface (101) and the second transport surface (102) serve to transport the multilayer film (10), which can be arranged between the first and the second transport surface (101, 102),
• and an interferometer for splitting a source radiation, which can be generated by the radiation source (2), into the electromagnetic primary radiation (21) and a reference beam by means of a beam splitter of the interferometer and for superimposing the secondary radiation on the reference beam,

wherein the radiation source (2) is arranged on the first transport roller (110) in such a way that the electromagnetic primary radiation (21) can be guided from the first transport roller (110) the multilayer film (10), wherein the first transport roller (110) comprises an elastic coating on the first transport surface (101), wherein the elastic coating is transparent to the electromagnetic primary radiation (21) and wherein the device is designed such that in an operating state the first transport roller (101) and the second transport roller (120) can exert a pressure on each other in such a way that a distance between the first transport roller (110), the second transport roller (120) and the multilayer film (10) is minimized by the elastic coating and the air is completely displaced from a contact area of the first transport roller (110) and the multilayer film (10) and thus from the measuring area.

**2.** The device according to claim 1, comprising a fluid dispenser (1) which is provided in such a way that for the formation of an immersion fluid layer (50) between the multilayer film (10) and the first transport roller (110), in the operating state the multilayer film (10) can be applied with an immersion fluid (51) from the fluid dispenser (5) and the electromagnetic primary radiation (21) from the first transport roller (110) can be guided via the immersion fluid layer (50) onto the multilayer film (10).

**3.** The device according to claim 1 or 2, wherein the radiation source (2) is arranged at one side of the first transport roller (110) in such a way that the electromagnetic primary radiation (21) can be guided along an axis (X) into the first transport roller (110), and a reflector (4, 40) is arranged twisted relative to the axis (X) in such a way that the electromagnetic primary radiation (21) can be focused onto the multilayer film (10).

**4.** The device according to claim 3, wherein the reflector (4, 40) is arranged in the first transport roller (110) by means of a stationary carrier body (6), and an immersion fluid for suppressing a reflection by avoiding a refractive index change at a material boundary is arranged in a rotation gap (61) between the carrier body (6) and the first transport roller (110) rotatable about the carrier body.

**5.** The device according to claim 4, wherein the reflector (4, 40) is arranged in the carrier body (6) and the carrier body (6) is made of a solid material or is filled with the immersion fluid (51).

6. The device according to any one of the claims 3 to 5, wherein the reflector (4, 40) is a mirror (4), in particular a parabolic mirror (4), especially an off axis parabolic mirror.

7. The device according to any one of the preceding claims, wherein the radiation source (2) is a laser.

8. The device according to any one of the preceding claims, wherein the radiation source (2) is a broadband light source.

9. A method for determining a layer thickness in a multilayer film (10) with a device according to any one of the claims 1 to 8, comprising:

   • making the contact between the first transport surface (101) and the multilayer film (10),
   • guiding the electromagnetic primary radiation (21) from the first transport roller (110) onto the multilayer film (10),
   • detecting electromagnetic secondary radiation emitted from the multilayer film (10), which secondary radiation is induced by an interaction of the primary radiation (21) with the multilayer film (10).

10. The method according to claim 9, wherein an immersion fluid (51) from a fluid dispenser (5) is applied onto the multilayer film (10) for the formation of an immersion fluid layer (50) between the multilayer film (10) and the first transport roller (110).

11. The method according to claim 9 or 10, wherein the secondary radiation is a secondary radiation transmitted by the multilayer film (10) or reflected by the multilayer film (10).

12. The method according to claim 10, wherein a first refractive index $n_a$ of the first transport roller (11, 110, 111) is substantially equal to a second refractive index $n_b$ of the immersion fluid (51) and at the same time is substantially equal to a third refractive index $n_c$ of the surface layer (10a) of the multilayer film (10), and in particular a ratio of $n_a$ to $n_b$ is equal to a ratio of $n_b$ to $n_c$ and is between 0.9 and 1.1, particularly preferably between 0.95 and 1.05.

**Revendications**

1. Un dispositif de tomographie par cohérence optique pour déterminer une épaisseur de couche dans un film multicouche (10) comprenant :

   • une source de rayonnement (2) pour la génération d'un rayonnement primaire électromagnétique (21),
   • un détecteur pour détecter un rayonnement secondaire électromagnétique émis par le film multicouche (10), lequel rayonnement secondaire est induit par une interaction du rayonnement primaire (21) avec le film multicouche (10),
   • un premier rouleau de transport (110) rotatif autour d'un premier axe de rotation et transparent au rayonnement primaire électromagnétique, avec une première surface de transport (101) pour établir un contact avec le film multicouche (10), et un deuxième rouleau de transport (120) avec une deuxième surface de transport (102) pour le transport du film multicouche (10), dans lequel la première surface de transport (101) et la deuxième surface de transport (102) servent au transport du film multicouche (10), qui peut être disposé entre la première et la deuxième surface de transport (101, 102),
   • ainsi qu'un interféromètre pour diviser un rayonnement de source, qui peut être généré par la source de rayonnement (2), en le rayonnement primaire électromagnétique (21) et un faisceau de référence au moyen d'un diviseur de faisceau de l'interféromètre et pour superposer le rayonnement secondaire au faisceau de référence,

   dans lequel la source de rayonnement (2) est disposée sur le premier rouleau de transport (110) de telle sorte que le rayonnement primaire électromagnétique (21) peut être guidé depuis le premier rouleau de transport (110) sur le film multicouche (10), dans lequel le premier rouleau de transport (110) comprend un revêtement élastique sur la première surface de transport (101), dans lequel le revêtement élastique est transparent au rayonnement primaire électromagnétique (21) et dans lequel le dispositif est conçu de telle sorte que, dans un état de fonctionnement, le premier rouleau de transport (101) et le deuxième rouleau de transport (120) peuvent exercer une pression l'un sur l'autre de telle sorte qu'une distance entre le premier rouleau de transport (110), le deuxième rouleau de transport (120) et le film multicouche (10) est minimisée par le revêtement élastique et que l'air est complètement chassé d'une zone de contact du premier rouleau de transport (110) et du film multicouche (10), et donc de la zone de mesure.

**2.** Le dispositif selon la revendication 1, comprenant un distributeur de fluide (5) qui est prévu de telle sorte que, pour la formation d'une couche de fluide d'immersion (50) entre le film multicouche (10) et le premier rouleau de transport (110), le film multicouche (10) peut être appliqué en état de fonctionnement avec un fluide d'immersion (51) provenant du distributeur de fluide (5) et le rayonnement primaire électromagnétique (21) provenant du premier rouleau de transport (110) peut être guidé via la couche de fluide d'immersion (50) sur le film multicouche (10).

**3.** Le dispositif selon la revendication 1 ou 2, dans lequel la source de rayonnement (2) est disposée sur un côté du premier rouleau de transport (110) de telle sorte que le rayonnement primaire électromagnétique (21) peut être guidé le long d'un axe (X) dans le premier rouleau de transport (110), et un réflecteur (4, 40) est disposé en torsion par rapport à l'axe (X) de manière que le rayonnement primaire électromagnétique (21) peut être focalisé sur le film multicouche (10).

**4.** Le dispositif selon la revendication 3, dans lequel le réflecteur (4, 40) est disposé dans le premier rouleau de transport (110) au moyen d'un corps de support stationnaire (6), et un fluide d'immersion pour supprimer une réflexion en évitant un changement d'indice de réfraction à une limite de matériau est disposé dans une fente de rotation (61) entre le corps de support (6) et le premier rouleau de transport (110) rotatif autour du corps de support.

**5.** Le dispositif selon la revendication 4, dans lequel le réflecteur (4, 40) est disposé dans le corps de support (6) et le corps de support (6) est constitué d'un matériau solide ou est rempli du fluide d'immersion (51).

**6.** Le dispositif selon l'une des revendications 3 à 5, dans lequel le réflecteur (4, 40) est un miroir (4), en particulier un miroir parabolique (4), notamment un miroir parabolique hors axe.

**7.** Le dispositif selon l'une des revendications précédentes, dans lequel la source de rayonnement (2) est un laser.

**8.** Le dispositif selon l'une des revendications précédentes, dans lequel la source de rayonnement (2) est une source de lumière à large bande.

**9.** Un procédé pour déterminer une épaisseur de couche dans un film multicouche (10) avec un dispositif selon l'une des revendications 1 à 8, comprenant :

> • établir le contact entre la première surface de transport (101) et le film multicouche (10),
> • guider le rayonnement primaire électromagnétique (21) provenant du premier rouleau de transport (110) sur le film multicouche (10),
> • détecter le rayonnement secondaire électromagnétique émis par le film multicouche (10), lequel rayonnement secondaire est induit par une interaction du rayonnement primaire (21) avec le film multicouche (10).

**10.** Le procédé selon la revendication 9, dans lequel un fluide d'immersion (51) provenant d'un distributeur de fluide (5) est appliqué sur le film multicouche (10) pour la formation d'une couche de fluide d'immersion (50) entre le film multicouche (10) et le premier rouleau de transport (110).

**11.** Le procédé selon la revendication 9 ou 10, dans lequel le rayonnement secondaire est un rayonnement secondaire transmis par le film multicouche (10) ou réfléchi par le film multicouche (10).

**12.** Le procédé selon la revendication 10, dans lequel un premier indice de réfraction $n_a$ du premier rouleau de transport (11, 110, 111) est sensiblement égal à un deuxième indice de réfraction $n_b$ du fluide d'immersion (51) et est en même temps sensiblement égal à un troisième indice de réfraction $n_c$ de la couche de surface (10a) du film multicouche (10), et en particulier un rapport de $n_a$ à $n_b$ est égal à un rapport de $n_b$ à $n_c$ et est compris entre 0.9 et 1.1, particulièrement préférée entre 0.95 et 1.05.

Fig.1a

Fig.2

Fig.1b

Fig.3

Fig.4

Fig.5a

Fig.5b

Fig.6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5850287 A

- US 2004227952 A